# EUROPEAN PATENT SPECIFICATION

(11) **EP 0 579 572 B1**
(45) Date of publication and mention of the grant of the patent: **12.03.1997**
(21) Application number: 93500106.5
(22) Date of filing: 16.07.1993
(51) Int. Cl.: H05B 41/392, G01J 1/04

(54) **Lamp brightness control circuit with ambient light compensation**
Beleuchtungsteuerungsschaltung mit Aussenlicht Kompensation
Circuit de commande de l'intensité lumineuse avec compensation de l'éclairage ambiant

(30) Priority: 17.07.1992 ES 9201502
(43) Date of publication of application: 19.01.1994
(73) Proprietor: Gallar Corral, Enrique, E-28033 Madrid (ES)
(72) Inventor: Gallar Corral, Enrique, E-28033 Madrid (ES)
(74) Representative: Elzaburu Marquez, Alberto

(56) References cited:
- EP-A- 0 239 443
- WO-A-93/09649
- DE-A- 3 127 086
- US-A- 4 982 139

## Description

### BACKGROUND OF THE INVENTION

The present relates to an arc intensity regulator in fluorescent tubes as per the preamble of claim 1, the obvious purpose of which is to attain a substantial energy saving in addition to introduce substantial advantages and novelties in relation to ail the previous apparatuses designed for obtaining an energy saving in fluorescent tubes.

### FIELD OF THE INVENTION

This invention applies to the electricity and electronics field.

### RELATED ART

Proposals have been made in the prior art to provide devices intended to control light intensity in lamps. Thus, in the US-A-4 982 139 an apparatus for controlling light intensity is disclosed, wherein an object is illuminated with light of substantially constant intensity from an electric light bulb whose voltage supply varies in accordance with the intensity of the light radiated from the bulb and sensed by a photodiode, the latter being separated from the bulb by a length of lightguide fiber into which light from the bulb is coupled by a glass rod. In this way, the light picked up by the glass rod is sent through the lightguide fiber to the photodiode.

Also, in WO-A-9 309 649 a lamp brightness control circuit with ambient light compensation is disclosed, wherein an auxiliary circuit is provided for reducing the brightness of one or more lamps when excess ambient light is available, and for increasing such brightness as available ambient light is reduced. A photocell obtains information on ambient light levels through an ambient light gathering prism connected to one end of a flexible fiber optic cable, the other end of the latter being brought near the photocell.

### SUMMARY OF THE INVENTION

Starting from the known prior art, the applicant has developed an arc intensity regulator in fluorescent tubes with the features set forth in the characterizing part of claim 1. Preferred embodiments of the invention are shown in sub-claims 2 and 3.

The arc intensity regulator in fluorescent tubes configures in two basic versions, the first version being applicable to areas having a considerable contribution to outer light, by dinamically regulating the fluorescent tube consumptiom, according to the natural light from the area where it is installed.

The sensing of the natural light is carried out by means of a lense-photoresistant optical fiber assembly.

The second basic version is applicable to areas where the lighting is excessive by design for performing the function carried out in the area.

In this second case, the regulation is performed by means of a potentiometer substituting the previously mentioned optoelectric assembly, and the adjustment is carried out when the apparatus is placed and, under normal conditions, no additional regulation is needed.

According to the versions, the invention saves, from the moment of starting, between 30% and 42% of the energy consumed by a fluorescent tube fitted with a conventional start, and it obtains higher savings in each case according to the type installed and the installation conditions.

At present, the arc intensity regulator in fluorescent tubes corresponds to the following operating pattern, i.e.:
- By energizing the tubes in high frequency, the ignition of same is made through a coil-condenser assembly which is resonant to the operating frequency and as long as the tube is turn off.
- When the tube is turn on, the system stops being resonant by the conduction thereof, and the condenser allows a small leak current for heating cathodes.
- The coil-condenser-tube system energizing is carried out by means of the MOSFET power transistors, the function of which is to generate a square wave at the working frequency, said transistors being reached, in turn, by the energizing and regulating system.

The intensity is carried from a double wave rectifier at an industrial frequency and a maximum network voltage over a stabilization and filter condenser, and from there to a divisor formed by two condensers and two balancing resistors. So, at each semicycle the tube works at half the maximum network voltage.

The energizing system reach the Mosfet's by means of a pulse transformer by energizing them in antiparallel, and two assemblies of two resistors and two quick switching diodes.

One of the two resistors is in series with the door in order to limit the load intensity from its trip capacity, and the other resistor is located between drainer and door, so that it settles the door reference in a condition of cut off transistor.

The function of the quick switching diode is to protect the transistors from overvoltages when cutting off and to unload the parasitic capacities of the system for the next switching to conduction.

Also, there is a diode unloading cutting off overvoltages over the stabilizing condenser and filter which follows the power rectifier.

The primary of the pulse transformer is fed via a square wave oscillator, for example type 3525 A, at the working frequency of the power zone.

The frequency is established by means of a RC network, reaching different doors of the integrate.

What as far as here described corresponds to a conventional electronic ignition equipment with the only substitution of the traditional blocking oscillator by an intergrated circuit generating the oscillation at the working frequency, which allows its encapsulating in hybrid circuits of surface mounting.

The true novelty of this invention for an arc intensity regulator in fluorescent tubes is its regulating system for controlling the arc in fluorescent tubes.

This regulating means is based on two main parts, i.e:
1.- Captation of the ambient brightness. (Optical assembly of the regulation.)
2.- Frequency control of the working cycle of main oscillator.

The optical assembly is composed of an injected or lathe-turned plastic lense, which by means of fixed planes, gathers both the natural light contribution and the adequate backfeeding of the - lights.

These two luminous flows are transmmited by means of a monomode or multimode optic fiber cable, at an corrected spectrum photoresistance which varies its resistance according to the intensity of the furnished light, turning an optic signal into an electric signal, this photoresistance being the link between the optic system and the electric one.

The so obtained signal is converted to variable voltage levels according to the ambient brightness.

Once this signal has been obtained, the second part of the regulation is performed by means of a control oscillator.

For changes of the expressed voltage of brightness within the operating range of the control oscillator, this later change its oscillation frequency within its oscillating range.

This oscillator is constituted by three operational high slope amplifiers contained in the same integrated and conventionally fed circuit and some necessary RC networks.

The outlet of this oscillator, at open collector, reaches the cutting off door of the main oscillator, so that the working cycle of this oscillator varies, causing a higher or lower intensity through the tube and, therefore, performing a control on the power delivered to the load (the coil-tube system, since the condenser cannot be considered as a part of the load).

Therefore, what obtained is a power regulation system on small inductive value and great resistive factor loads by means of a - modulating control of the pulse width. (PWM)

The energizing of a main oscillator by other control oscillator on the turning off door of the first one is a novel application of this integrated circuit due to the use of said door in a fully different way to that proposed by the manufacturer.

This regulating means, not removing, allows to obtain savings in a lighting system according to the natural light contribution in the installation area.

This saving value depends on the location and direction of the installation area, but it varies between 30% and 80% of the nominal power through a conventional ignition.

The essential element of the optical assembly of the regulation is an acrylic lense, this lense presenting two planes, the function of each being as follows:

The light-captation entry is performed by the cylindrical plane occupying half the lense.

The 30° plane reflects the brightness which is appropiate of the light, and sends it, through the optic fiber, to the photo resistance, generating an appropiate backfeeding component.

The 60° plane reflects an ambient brightness, caught by the cylindrical plane, and sends it, through reflection, to the photocell, so creating a component of the ambient light backfeeding.

The variation between both luminous signals converts them to a resistance variation in the photocell, establishing the available control window.

The optic fiber is the better available light transmission methode, and, at present, a plastic optic fiber, monomode type, is used because it is most inexpensive and it perfectly adapts itself to the system requirements.

Any other type of available optic fiber can be used, provided it is flexible.

Any variation in the lens angles creates variations of the caught components according to the above-mentioned philosophy, but essentially the operation is identical.

The electrical assembly of regulation is composed of two perfectly defined elements:
- A regulation oscillator.
- A main or energizing oscillator.

The regulation oscillator operates within margins from 0 thru 700 Hz according to the photocell operating conditions.

The resistance variations caused by the light variations are converted to voltage variations by means of a divider which acts as a reference level for the regulation oscillator.

This oscillator operates at a higher frequency when the photocell resistance is smaller, and, therefore, when the external light is higher.

Although the present models do not incorporate it, it has been provided and designed a potentiometer limiting the maximal brightness of the tube, providing a great operativeness to the equipment, since it may be desirable to limit this condition in overlighted areas.

The potentiometer and related elements situation is shown in the accompanying drawings.

The outlet of the oscillator is by means of an open collector, this allowing the intensity to enter at the outlet, the voltage of which varies beteween the open collector and positive saturation to the control system feeding voltage.

To the outlet of this oscillator, there is connected the stopping inlet of the energizing oscillator, with which this later interrumps its conduction time at each semicycle according to the regulator oscillation.

So, as regards higher frequency oscillations, the working cycle of the main oscillator has a minor relationship to minor frequencies, so variating the power delivered to the load.

### BRIEF DESCRIPTION OF THE DRAWINGS

In order to complement this description and to aid to a better understanding of the features of the invention, the accompanying drawings, which are a part of this specification, show in an illustrative but non limitative way, the following:

Figure 1 shows a duly sectioned side view of the acrylic lens incorporated in the arc intensity regulator in fluorescent tubes, which is the object of the invention.

Figure 2 shows a side view, provided with its upper and lower end sections corresponding to the hollow drum or cylinder incorporated into the invention.

Figure 3 corresponds to a side detail of the object illustrated in Figura 1.

Figure 4 shows, lastly, the whole assembly of the elements incorporated in the object of the invention, and operating the same.

### DETAILED DESCRIPTION OF THE INVENTION

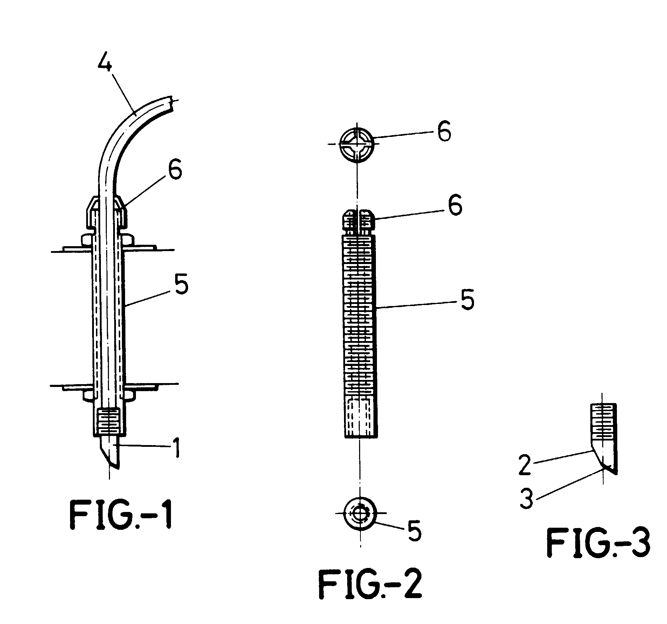

From these figures, and specifically Figure 1, it can be seen how the arc intensity regulator in fluorescent tubes is constituted by an acrylic lens (1), manufactured with acrylic plastics, and in this Figure it can be seen the plastic optic fiber (4) and the hollow drum or cylinder (5) preferently made of aluminium or bronze, inside of which the end of said optic fiber (4) is inserted, and at which lower end the acrylic lens (1) appears.

Figure 2, in which the hollow drum or cylinder (5) is represented, made preferently of aluminium or bronze, shows a wedge at the upper end (5) for anchoring the optic fiber (4), while its lower end has a drill for threading the acrylic lens (1).

Figure 3, illustrating a profile detail of said acrylic lens (1) shown in Figure 1, shows a 30° plane (2) reflecting the brightness which is appropiated to the lights, and it sends it through the optic fiber (4) to the photoresistance, so generating a component of adequate backfeeding.

This same Figure 3 shows, under reference (3) the 60° plane the function of which is to reflect the ambient brightness, caught by the cylindrical plane and sent by reflection to the photocell, so creating a ambient light backfeeding componente.

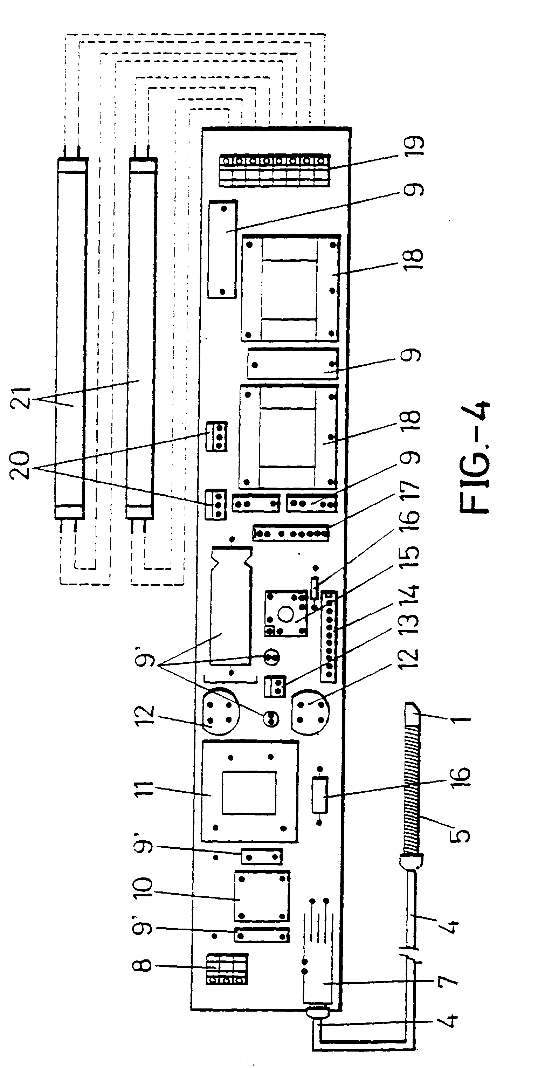

Figure 4 shows the whole assembly of the elements composing the operation of the arc intensity regulator in fluorescent tubes, this Figure illustrating the general diagram of the intallation.

In this Figure 4, it appears both the acryling lens and the metallic body (5) where the acrylic lens (1) is screwed at an end, and at the other end, the optic fiber cable (4) is inserted, this cable being connected to the L.D.R. referenced (7).

Reference (8) shows the inlet terminal plate, and references (9,9') indicate the condensers used in the installation.

Also, this same Figure shows the filter coil (10) and the feeding transformer (11), while the rectifying bridges have been referenced (12), and the regulator (13), as well as the control hybrid device (14).

The pulse transformer has been referenced (15), la resistors shown in the installation have been referenced (16) and the power hybrid device as (17).

Lastly, it can be pointed out that the coils forming a part of the installation have been referenced (18); the outlet terminal plate as (19) and the Mosfet's as (20), as well as the own fluorescent tubes as (21).

## Claims

1. An arc intensity regulator in fluorescent tubes comprising a control circuit that acts upon a power circuit which supplies one or more fluorescent tubes (21) with electric energy depending on the input voltage level set in said power circuit by means of either a lense-photoresistant optical fiber assembly (1, 4, 7) picking up the ambient brightness or a regulating potentiometer (13) limiting the maximum brightness of the fluorescent tubes (21), characterized in that said control circuit is an integrated circuit housed in a rectangular prismatic frame and including, arranged on a horizontal rectangular plane:
- a feeding transformer (11) that receives current through an inlet terminal plate (8) when the fluorescent tubes (21) are turned on;
- MOSFET power transistors (20) that, upon turning on the tubes (21), are fed through the feeding transformer (11) and generate a square wave at a working frequency to energize the system consisting of the tubes (21) as well as coils (18) and condensers (9) thereof;
- double wave rectifying bridges (12) that carry the current received from the feeding transformer (11) at an industrial frequency to a filter and stabilizing coil (10) and, from this, to a voltage divisor formed by condensers (9') and balancing resistors (16);
- a pulse transformer (15) that energizes the MOSFET transistors (20) in antiparallel;
- a power hybrid device (17) including a square wave main energizing oscillator that feeds the primary of the pulse transformer (15) at the working frequency of the power zone; and
- a control hybrid device (14) including a control oscillator consisting of three high slope operational amplifiers, the outlet of which, at open collector, reaches the cutting-off gate of the main oscillator of the power hybrid device (17) so as to vary the working cicle of the latter oscillator and cause a higher or lower current to flow through an outlet terminal plate (19) connected to the tubes (21).

2. An arc intensity regulator in fluorescent tubes according to claim 1, characterized in that said integrated circuit includes two MOSFET power transistors (20) and two rectifying bridges (12).

3. An arc intensity regulator in fluorescent tubes according to any one of preceding claims, characterized in that said control hybrid device (14) includes a control oscillator operating at frequencies within the range from 0 to 700 Hz.

## Patentansprüche

1. Lichtbogenbeleuchtungsregler in Leuchtstoffröhren, der eine Steuerungsschaltung beinhaltet, die auf eine Leistungsschaltung wirkt, die entsprechend dem Eingangsspannungspegel eine oder mehrere Lichtstoffröhren (21) mit elektrischer Energie speist, wobei der Spannungspegel innerhalb besagter Leistungsschaltung entweder von einer aus einer Linse und einer photoresistenten Lichtleitfaser bestehenden Anordnung (1,4,7) zur Erfassung der umgebenden Lichtstärke oder von einem Regelpotentiometer (13) zur Beschränkung der maximalen Lichtstärke der Leuchtstoffröhren (21) eingestellt wird, dadurch gekennzeichnet, daß die vorgenannte Steuerungsschaltung eine integrierte Schaltung ist, die sich in einem rechteckigen, prismatischen Gehäuse befindet und, auf einer rechteckigen horizontalen Ebene angeordnet, folgendes umfaßt:
- einen Netztranformator (11), der über einen Eingangsklemmenblock (8) mit Strom versorgt wird, wenn die Leuchtstoffröhren (21) eingeschaltet werden;
- MOSFET-Leistungstransistoren (20), die bei Einschaltung der Leuchtstoffröhren (21), durch den Netztransformator (11) gespeist werden und eine quadratische Welle auf einer Arbeitsfrequenz erzeugen und dazu dienen, das aus den Röhren (21), ihren Spulen (18) und ihren Kondensoren (9) bestehende System anzusteuern;
- Doppelwellen-Gleichrichterbrücken (12), die den vom Netztransformator (11) erhaltenen Strom auf einer industriellen Frequenz zu einer Filter- und Stabilisierungsspule (10) und von dieser zu einem aus Kondensoren (9') und Ausgleichswiderständen (16) bestehenden Spannungsteiler leiten;
- einen Impulstransformator (15), der die MOSFET-Transistoren (20) antiparallel ansteuert;
- eine hybride Leistungsvorrichtung (17), die einen Quadratwellen-Haupterregungsoszillator beinhaltet, der die Primärwicklung des Impulstransformators (15) auf der im Leistungsbereich vorhandenen Arbeitsfrequenz speist; und
- eine hybride Steuerungsvorrichtung (14), die einen aus drei mit einer großen Steigung ausgelegten Operationsverstärkern bestehenden Steuerungsoszillator enthält, dessen Ausgang bei offenem Kollektor in das Abschaltungsgatter des Hauptoszillators der hybriden Leistungsvorrichtung (17) gelangt, um den Arbeitszyklus des letztgenannten Oszillators zu ändern und eine größere oder geringere Stromstärke durch einen an die Leuchtstoffröhren (21) angeschlossenen Ausgangsklemmenblock (19) fließen zu lassen.

2. Lichtbogenbeleuchtungsregler in Leuchtstoffröhren gemäß Anspruch 1, dadurch gekennzeichnet, daß die benannte integrierte Schaltung zwei MOSFET-Leistungstransistoren (20) und zwei Gleichrichterbrücken (12) beinhaltet.

3. Lichtbogenbeleuchtungsregler in Leuchtstoffröhren gemäß einem der vorstehenden Ansprüche, dadurch gekennzeichnet, daß die benannte hybride Steuerungsvorrichtung (14) einen Steuerungsoszillator zum Arbeiten auf Frequenzen im Bereich von 0 bis 700 Hz beinhaltet.

## Revendications

1. Un régulateur de l'intensité d'arc dans des tubes fluorescents comprenant un circuit de commande qui agit sur un circuit de puissance qui donne une puissance électrique à un ou plusieurs tubes fluorescents (21) selon le niveau de voltage d'entrée ajusté sur ledit circuit de puissance au moyen, soit d'un assemblage de lentille-fibre optique photorésistante (1,4,7) qui recueille la lumière ambiante, soit d'un potentiomètre régulateur (13) limitant la lumière maximum des tubes fluorescents (21), caractérisé par le fait que ledit circuit de commande est un circuit intégré logé dans un cadre prismatique rectangulaire et comprenant, disposés sur un plan horizontal rectangulaire:
- un transformateur d'alimentation (11) qui reçoit le courant à travers une plaque terminale d'entrée (8) lorsque les tubes fluorescents (21) sont allumés;
- des transistors de puissance MOSFET (20) qui, lorsqu'on allume les tubes (21), sont alimentés à travers le transformateur d'alimentation (11) et produisent une onde carrée à une fréquence de fonctionnement afin d'activer le système composé des tubes (21) ainsi que de leurs bobines (18) et condensateurs (9);
- des ponts redresseurs à double onde (12) qui transportent le courant reçu depuis le transformateur d'alimentation (11) à une fréquence industrielle jusqu'à une bobine de filtre et de stabilisation (10) et, depuis celle-ci, jusqu'à un diviseur de voltage formé par des condensateurs (9') et des résistances d'équilibrage (16);
- un transformateur d'impulsions (15) qui excite les transistors MOSFET (20) en antiparallèle;
- un dispositif hybride de puissance (17) qui comprend un oscillateur exciteur principal à onde carrée qui alimente le primaire du transformateur d'impulsions (15) à la fréquence de fonctionnement de la zone de puissance; et
- un dispositif hybride de commande (14) qui comprend un oscillateur de commande composé de trois amplificateurs opérationnels à forte pente, la sortie duquel, lorsque le collecteur est ouvert, parvient à la porte de coupure de l'oscillateur principal du dispositif hybride de puissance (17) afin de modifier le cycle de fonctionnement du dernier oscillateur et faire un courant de plus haute ou plus basse intensité circuler à travers une plaque terminale de sortie (19) connectée aux tubes (21).

2. Un régulateur de l'intensité d'arc dans des tubes fluorescents conformément à la revendication 1, caractérisé par le fait que ledit circuit intégré comprend deux transistors de puissance MOSFET (20) et deux ponts redresseurs (12).

3. Un régulateur de l'intensité d'arc dans des tubes fluorescents conformément à l'une des revendications précédentes, caractérisé par le fait que ledit dispositif hybride de commande (14) comprend un oscillateur de commande qui fonctionne à des fréquences dans l'intervalle de 0 à 700 Hz.
